# EUROPEAN PATENT APPLICATION

(11) **EP 4 756 977 A1**
(43) Date of publication of application: **10.06.2026**
(21) Application number: 24875990.4
(22) Date of filing: 30.04.2024
(51) Int. Cl.: H01M 10/0587, H01M 10/0525, H01M 10/04, H01M 50/538, H01M 50/46

(54) **ELECTRODE ASSEMBLY, BATTERY CELL, BATTERY, AND ELECTRICAL DEVICE**

(30) Priority: 13.10.2023 CN 202322753780 U
(71) Applicant: Contemporary Amperex Technology Co., Limited, Ningde, Fujian 352100 (CN)
(72) Inventor: LI, Zhibin, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN)
(74) Representative: Lorenz Seidler Gossel Part. mbB
(86) International application number: PCT/CN2024/091054
(87) International publication number: WO 2025/077163

(57) **Abstract**

Provided are an electrode assembly (20), a battery cell (100), a battery (200), and an electrical device (1000). The electrode assembly (20) includes a first electrode plate (21), a second electrode plate (22), a first separator (23), and a second separator (24); the first separator (23), the first electrode plate (21), the second separator (23), and the second electrode plate (22) are sequentially stacked and wound to form an integrated body; the second electrode plate (22) and the first electrode plate (21) have opposite polarities; the first electrode plate (21) has a length end fixedly connected to at least one of the first separator (23) and the second separator (24); both the first separator (23) and the second separator (23) have a length end exceeding the length end of the first electrode plate (21) and fixedly connected to each other.

## Description

### PRIORITY INFORMATION

The present application claims priority to Patent Application No. 202322753780.4, filed with the China National Intellectual Property Administration on October 13, 2023, which is incorporated herein by reference in its entirety.

### TECHNICAL FIELD

The present application relates to the field of battery technologies, and in particular, to an electrode assembly, a battery cell, a battery, and an electrical device.

### BACKGROUND

With the development of the battery industry, batteries are used more and more widely, and battery safety issues have attracted attention. In the related art, the battery cell includes an electrode assembly, and the electrode assembly includes a positive electrode plate, a negative electrode plate, and a separator isolating the positive electrode plate and the negative electrode plate. During the production process of electrode assemblies, the electrode plates are prone to slipping with respect to the separator, causing the electrode plates to exceed the edge of the separator in the length direction, resulting in the scrapping of the electrode assembly. In addition, the lengthwise edges of the electrode plates are usually formed by cutting, and burrs are easily formed on the edges of the electrode plates in the length direction, which may pierce the separator and cause a short circuit in the electrode assembly.

### SUMMARY

The present application provides an electrode assembly, a battery cell, a battery and an electrical device, which can solve the problem that during the production process of the electrode assembly, the electrode plate is prone to slipping with respect to the separator and the edge of the electrode plate in the length direction is prone to forming burrs that pierce the separator.

The electrode assembly of the embodiment of the present application includes an electrode assembly, including a first electrode plate, a second electrode plate, a first separator, and a second separator, where the first separator, the first electrode plate, the second separator, and the second electrode plate are sequentially stacked and wound into an integrated body, and the second electrode plate and the first electrode plate have opposite polarities;

The first electrode plate has a length end fixedly connected to at least one of the first separator and the second separator, and both the first separator and the second separator have a length end exceeding the length end of the first electrode plate and fixedly connected to each other.

In the electrode assembly of the embodiment of the present application, the length end of the first electrode plate is fixedly connected to at least one of the first separator and the second separator, so that the size of the burr of the first electrode plate protruding from the electrode plate surface at the length end of the first electrode plate during the fixing process is reduced or covered, thereby reducing the risk of the burr piercing the separator, and also making it difficult for the first electrode plate to slip relative to the first separator or the second separator. In addition, the length ends of both the first separator and the second separator exceed the length end of the first electrode plate and are fixedly connected to each other, so that the first electrode plate will not exceed the edge of the first separator or the second separator in the length direction, thereby improving the yield of the electrode assembly.

In some embodiments, the length ends of the first separator and the second separator are both provided with a first adhesive which is for fixedly connecting the length ends of the first separator and the second separator; or
indentations are formed on the length ends of both the first separator and the second separator. In this way, the length ends of the first separator and the second separator are easily fixed together, and the cost is low.

In some embodiments, a second adhesive is provided between the length end of the first electrode plate and at least one of the first separator and the second separator, and the second adhesive is for fixedly connecting the length end of the first electrode plate and at least one of the first separator and the second separator. In this way, the length end of the first electrode plate can be easily fixed on at least one of the first separator and the second separator, and the cost is low.

In certain embodiments, the first electrode plate includes a main body and a tab connected to one side of the main body in a width direction, and both the first separator and the second separator have a width end exceeding the width end of the main body and fixedly connected to each other. In this way, the first separator and the second separator can limit the movement of the first electrode plate in the width direction, reducing the risk of the first electrode plate moving out of the first separator or the second separator along its own width direction.

In some embodiments, the width ends of the first separator and the second separator are both provided with a third adhesive which is fixedly connected to the width ends of the first separator and the second separator; or indentations are formed on the width ends of both the first separator and the second separator. In this way, the width ends of the first separator and the second separator are easily fixed together, and the cost is low.

In certain embodiments, the tab protrudes beyond the edges of the first separator and the second separator in the width direction. In this way, the tabs can lead out the current.

In some embodiments, a length ratio of at least one of the first separator and the second separator to the first electrode plate is R, and 1.05 < R < 1.5. In this way, the first separator and the second separator can completely cover the first electrode plate, and the length ends of the first separator and the second separator can be easily fixedly connected.

In certain embodiments, a bonding force at the length ends of both the first separator and the second separator to the first electrode plate is more than 1 N/m. In this way, the first separator and the second separator have a large bonding force, and the two are difficult to be loosened.

A battery cell according to an embodiment of the present application includes a case and an electrode assembly according to any one of the above embodiments, where the electrode assembly is disposed within the case.

A battery according to an embodiment of the present application includes a plurality of the battery cells according to any one of the above embodiments.

An electrical device according to an embodiment of the present application includes a battery cell according to any one of the above embodiments or a battery according to the above embodiment.

Other aspects and advantages of the present application will be given in the following description, some of which will become apparent from the following description or may be learned from practices of the present application.

### BRIEF DESCRIPTION OF THE DRAWINGS

The foregoing and/or additional aspects and advantages of the present application will become apparent and comprehensible in the description of the embodiments made with reference to the following accompanying drawings.
FIG. 1 is a schematic structural diagram of an electrical device according to some embodiments of the present application;
FIG. 2 is a schematic structural diagram of a battery according to some embodiments of the present application;
FIG. 3 is a schematic exploded view of a battery cell according to some embodiments of the present application;
FIG. 4 is a schematic diagram of a partially flattened electrode assembly according to some embodiments of the present application;
FIG. 5 is a schematic sectional diagram of a flattened electrode assembly according to some embodiments of the present application;
FIG. 6 is a schematic plan diagram of a flattened electrode assembly according to some embodiments of the present application;
FIG. 7 is another schematic plan diagram of a flattened electrode assembly according to some embodiments of the present application.

### Descriptions of reference numerals:

1000-electrical device, 200-battery, 300-controller, 400-motor, 100-battery cell, 10-case, 20-electrode assembly, 21-first electrode plate, 211-main body, 212-tab, 22-second electrode plate, 23-first separator, 24-second separator.

### DETAILED DESCRIPTION

The embodiments of the technical solutions of the present application will be described in detail below with reference to the drawings. The following embodiments are only used to describe the technical solutions of the present application more explicitly, and are thus only interpreted as examples, rather than used to limit the protection scope of the present application.

Unless otherwise defined, all technical and scientific terms used herein have the same meaning as commonly understood by those skilled in the technical field to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

In the description of the embodiments of the present application, the technical terms "first", "second", and the like are only intended to distinguish different objects, and should not be understood as indicating or implying relative importance or implying the number, specific order or primary and secondary relationship of indicated technical features. In the description of the embodiments of the present application, "a plurality of" means two or more, unless otherwise expressly and specifically defined.

Embodiment mentioned in the specification means that particular features, structures, or characteristics described with reference to the embodiment may be included in at least one embodiment of the present application. The term appearing at different positions of this description may not refer to the same embodiment or an independent or alternative embodiment that is mutually exclusive with another embodiment. A person skilled in the art explicitly or implicitly understands that the embodiments described in the specification may be combined with other embodiments.

In the descriptions of the present application, the term "and/or" is merely an association to describe the associated objects. It can mean that there are three kinds of relationships, such as A and/or B, which means that A exists alone, A and B exist at the same time, and B exists alone. In addition, the character "/" in this specification generally indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, and thus cannot be understood as limitations on the embodiments of the present application.

In the descriptions of the embodiments of the present application, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those skilled in the art, the specific meanings of the above terms in the embodiments of the present application may be interpreted according to the specific situations.

Currently, from the perspective of development of the market situation, battery applications have proliferated. Lithium batteries are not only used in energy storage power systems such as hydroelectric power plants, thermal power plants, wind power plants, and solar power plants, but also widely used in electric transportation such as electric bicycles, electric motorcycles, and electric vehicles, as well as aerospace, and many other fields. With continuous expansion of application fields of batteries, market demands for batteries are also expanding.

The battery cell includes an electrode assembly, which includes a positive electrode plate, a negative electrode plate and a separator. The electrode assembly can be wound into an integrated body. During the winding process of the electrode assembly, at the starting end and the terminal end of the winding of the electrode assembly, at least one of the positive electrode plate and the negative electrode plate is prone to slipping with respect to the separator, thereby causing the positive electrode plate and the negative electrode plate to exceed the edge of the separator and connect to short-circuit. In addition, electrode plates are usually obtained through a cutting process. During the cutting process, burrs are easily formed on the cut edges of the electrode plates. These burrs easily pierce the separator during the winding process of the electrode assembly or during subsequent use, causing a short circuit in the electrode assembly.

In order to solve the problem that the electrode plate is prone to slipping with respect to the separator and the edge of the electrode plate in the length direction is prone to forming burrs that pierce the separator during the production process of the electrode assembly, the length end of the first electrode plate is fixedly connected to at least one of the first separator and the second separator, so that the size of the burr of the first electrode plate protruding from the electrode plate surface at the length end of the first electrode plate during the fixing process is reduced or covered, thereby reducing the risk of the burr piercing the separator, and also making it difficult for the first electrode plate to slip relative to the first separator or the second separator. In addition, the length ends of both the first separator and the second separator exceed the length end of the first electrode plate and are fixedly connected to each other, so that the first electrode plate will not exceed the edge of the first separator or the second separator in the length direction, thereby improving the yield of the electrode assembly.

It should be noted that, in the present application, the "electrode plate" may refer to the first electrode plate or the second electrode plate. One of the first electrode plate and the second electrode plate is a positive electrode plate, and the other is a negative electrode plate.

An electrical device according to an embodiment of the present application includes a battery or a battery cell according to any one of the following embodiments. Specifically, the electrical device may include a battery or a battery cell as a power source, and the electrical device may be but is not limited to, a mobile phone, a tablet computer, a notebook computer, an electric toy, an power tool, an electric bike, an electric vehicle, a ship, a spacecraft, or the like. The electric toy may include a fixed or mobile electric toy, for example, a game console, an electric automobile toy, an electric ship toy, and an electric airplane toy. The spacecraft may include an airplane, a rocket, a spacecraft, a spaceship, and the like.

For ease of description, the electrical device 1000 being a vehicle in an embodiment of the present application is used as an example to describe the following embodiments.

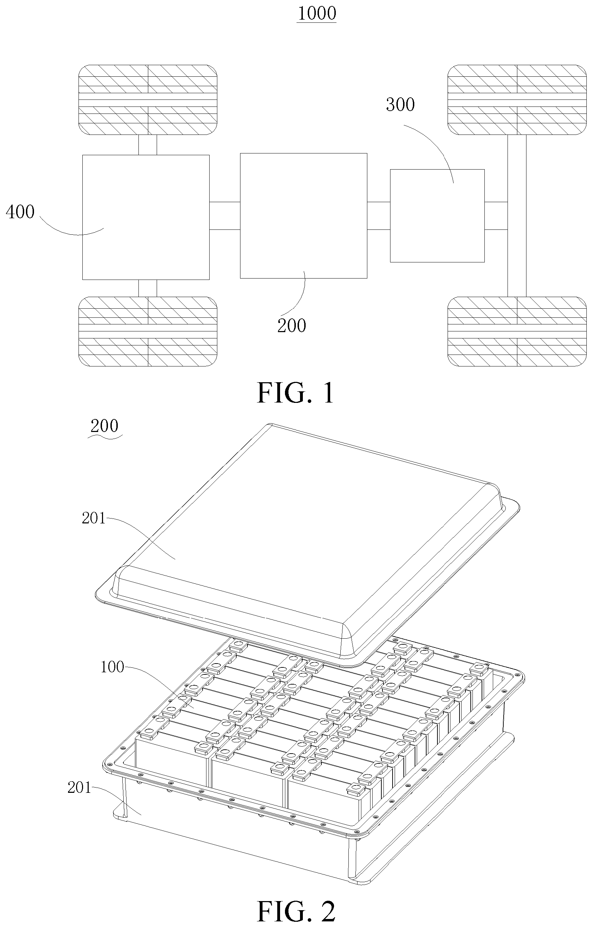

Referring to FIG. 1, FIG. 1 is a schematic structural diagram of an electrical device 1000 according to some embodiments of the present application. A battery 200 is arranged inside the vehicle. The battery 200 may be arranged at the bottom, head, or tail of the vehicle. The battery 200 may be configured to supply power to the vehicle. For example, the battery 200 may be used as a power supply for operating the vehicle.

The vehicle may further include a controller 300 and a motor 400. The controller 300 is configured to control the battery 200 to supply power to the motor 400, for example, to meet working electricity requirements during startup, navigation, and driving of the vehicle.

In some embodiments of the present application, the battery 200 can not only serve as a power supply for operating the vehicle, but can also serve as a power supply for driving the vehicle, in place of or partially in place of fuel or natural gas, to provide driving power for the vehicle.

Referring to FIG. 2, FIG. 2 is a schematic structural diagram of the battery 200 according to some embodiments of the present application. The battery 200 according to the embodiment of the present application includes the battery cell 100 according to any one of the following embodiments. In the present application, the battery cell 100 may include a lithium ion secondary battery, a lithium ion primary battery, a lithium-sulfur battery, a sodium-lithium ion battery, a sodium ion battery, a magnesium ion battery, or the like, which is not limited in the embodiments of the present application. The battery cell 100 may be cylindrical, flat, cuboid, or in other shapes, which is not limited in the embodiments of the present application either. Generally, the battery cells 100 are classified into three types based on packaging methods: cylindrical battery cells, prismatic battery cells, and pouch battery cells, which are also not limited in the embodiments of the present application.

The battery 200 typically includes a battery box 201 for packaging one or more battery cells 100. A plurality of batteries can be contained in the battery box 201, and the battery box 201 can prevent liquid or other foreign matters from affecting charging or discharging of the battery cells 100. The battery box 201 serves as a carrier of the battery module and plays a key role in the safe operation and protection of the battery module. The battery box 201 must meet the strength and stiffness requirements and the protection level requirements of the electrical equipment case, while providing collision protection. The shape of the battery box 201 can be a cuboid, a cube, etc. The battery box 201 can be cast with materials such as steel plates and aluminum alloys; it can also be made of new lightweight materials such as glass fiber reinforced composite materials and carbon fiber reinforced meeting materials.

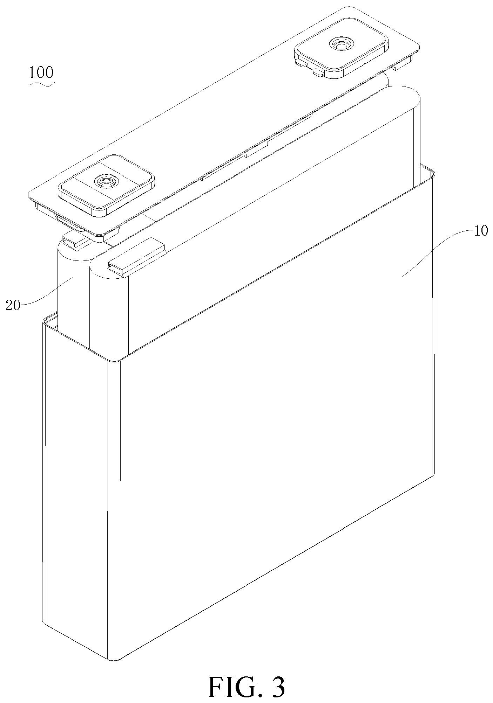

Referring to FIG. 3, FIG. 3 is an exploded diagram of a battery cell 100 according to some embodiments of the present application. In some embodiments, the battery cell 100 includes a case 10 and an electrode assembly 20. The electrode assembly 20 is disposed within the case 10.

The electrode assembly 20 is a component in the battery cell 100 where an electrochemical reaction occurs. The case 10 of the battery cell 100 may include one or more electrode assemblies 20.

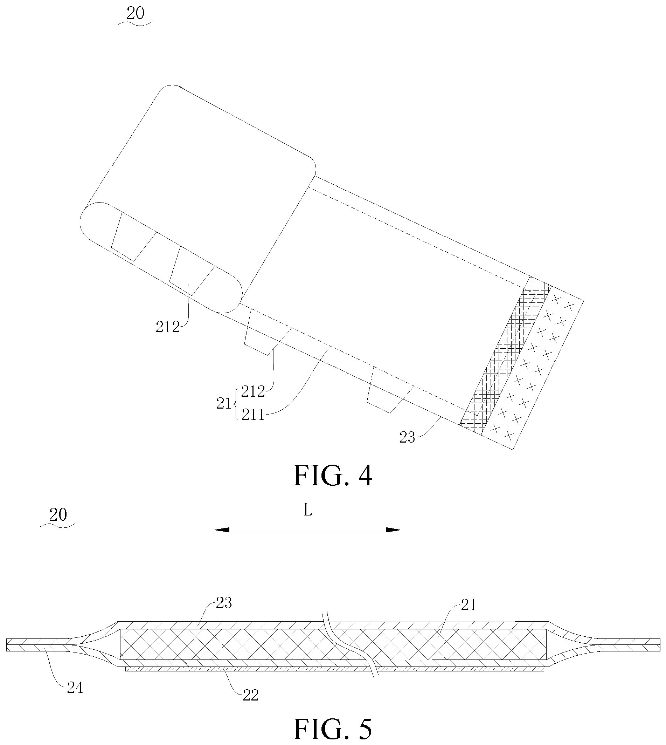

Referring to FIG. 4 and FIG. 5, FIG. 4 is a schematic diagram of a partially flattened electrode assembly 20 according to some embodiments of the present application, and FIG. 5 is a schematic sectional diagram of a flattened electrode assembly 20 according to some embodiments of the present application. The electrode assembly 20 of the embodiment of the present application includes a first electrode plate 21, a second electrode plate 22, a first separator 23, and a second separator 24. The first separator 23, the first electrode plate 21, the second separator 24, and the second electrode plate 22 are sequentially stacked and wound into an integrated body. The second electrode plate 22 and the first electrode plate 21 have opposite polarities.

The first electrode plate 21 has a length end fixedly connected to at least one of the first separator 23 and the second separator 24, and both the first separator 23 and the second separator 24 have a length end exceeding the length end of the first electrode plate 21 and fixedly connected to each other.

Specifically, the first electrode plate 21 and the second electrode plate 22 are two electrode plates with opposite polarities. One of the first electrode plate 21 and the second electrode plate 22 is a positive electrode plate, and the other is a negative electrode plate. During charging and discharging of the battery cell 100, the positive electrode active substance and the negative electrode active substance can react with the electrolyte.

The first separator 23 and the second separator 24 can isolate the first electrode plate 21 from the second electrode plate 22. That is, the first separator 23 or the second separator 24 is provided between the first electrode plate 21 and the second electrode plate 22. The first electrode plate 21 and the second electrode plate 22 are spaced from each other and will not contact each other, thereby reducing the risk of short circuit between the first electrode plate 21 and the second electrode plate 22.

The first electrode plate 21, the second electrode plate 22, the first separator 23 and the second separator 24 are stacked on each other in their respective thickness directions. The first separator 23, the second separator 24, the first electrode plate 21 and the second electrode plate 22 are wound into a cylindrical shape, or may be wound into a substantially square shape.

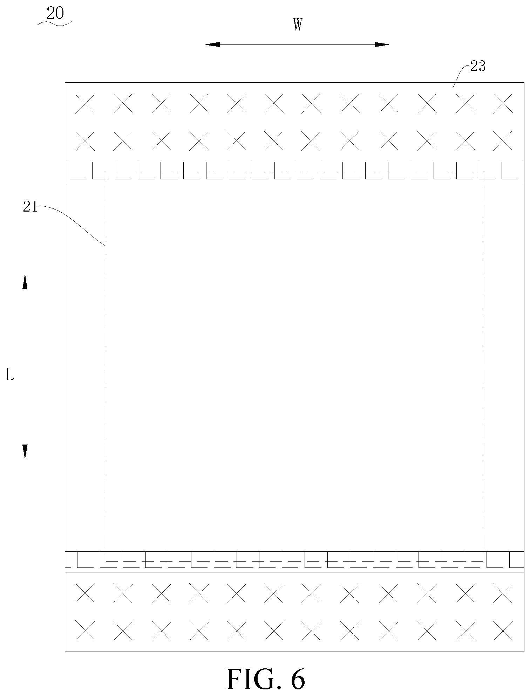

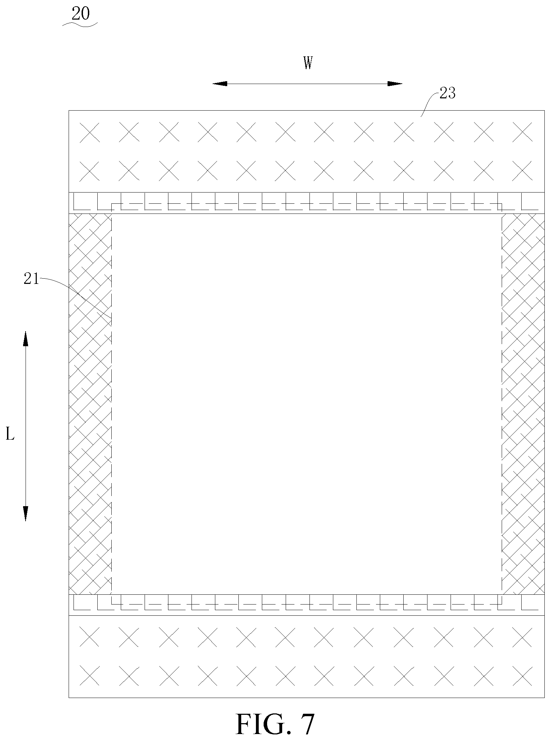

As shown in FIG. 6 and FIG. 7, the filled portion is represented by the portion where the first separator 23 and the second separator 24 are fixed to each other, or the portion where the first electrode plate 21 and at least one of the first separator 23 and the second separator 24 are fixed to each other.

It should be noted that the "length end" mentioned above refers to the two ends in the length direction L of the sheet material when the sheet material is in a flattened state. For example, the length end of the first separator 23 is an end in the length direction L of the first separator 23 when the first separator 23 is in a flattened state. The length end of the second separator 24 is an end in the length direction L of the second separator 24 when the second separator 24 is in a flattened state.

The length ends of the first separator 23, the second separator 24, the first electrode plate 21 and the second electrode plate 22 respectively form the starting end or the terminal ends of the winding of the electrode assembly 20. During the production process of the electrode assembly 20, the first separator 23, the second separator 24, the first electrode plate 21 and the second electrode plate 22 may be first combined to form an integral body in a flattened state, and then wound to form a wound body.

In the embodiment of the present application, the two length ends of the first separator 23 are fixed in a one-to-one correspondence with the two length ends of the second separator 24. The two length ends of the first electrode plate 21 may be fixed to at least one of the first separator 23 and the second separator 24.

Therefore, in the electrode assembly 20 of the embodiment of the present application, the length end of the first electrode plate 21 is fixedly connected to at least one of the first separator 23 and the second separator 24, so that the size of the burr of the first electrode plate 21 protruding from the surface of the electrode plate 21 at the length end of the first electrode plate during the fixing process is reduced or covered, thereby reducing the risk of the burr piercing the separator, and also making it difficult for the first electrode plate 21 to slip relative to the first separator 23 or the second separator 24. In addition, the length ends of both the first separator 23 and the second separator 24 exceed the length end of the first electrode plate 21 and are fixedly connected to each other, so that the first electrode plate 21 will not exceed the edge of the first separator 23 or the second separator 24 in the length direction L, thereby improving the yield of the electrode assembly 20.

Referring to FIG. 5 and FIG. 6, in some embodiments, a first adhesive (not shown) is provided between the length ends of the first separator 23 and the second separator 24, and the first adhesive is for fixedly connecting the length ends of the first separator 23 and the second separator 24; or, indentations are formed on the length ends of the first separator 23 and the second separator 24.

Specifically, the first adhesive is, for example, a double-sided adhesive, an adhesive formed by liquid solidification, or the like. The first adhesive can be made of materials such as an epoxy resin, a phenolic resin, a urea-formaldehyde resin, and polyurethane. It should be noted that the first adhesive may have a certain elasticity so that the first adhesive will not damage the electrode plate and the separator. In one example, during the manufacturing process of the electrode assembly 20, a first adhesive can be first applied to the length end of the first separator 23, and then the length end of the second separator 24 can be laminated to the first adhesive, so that the length end of the first separator 23 and the length end of the second separator 24 are fixed together.

The "laminating process" can be, for example, a direct laminating process, a rolling laminating process, etc. During the laminating process of the length ends of the first separator 23 and the second separator 24, pressure can be applied to the length ends of the first separator 23 or the second separator 24, so that the first separator 23 and the second separator 24 are bonded and fixed to each other. The length ends of the first separator 23 and the second separator 24 can be laminated together by hot rolling lamination, cold rolling lamination, knurling lamination or the like. The indentations are, for example, knurled indentations formed on the first separator 23 and/or the second separator 24.

For example, during the laminating process of the first separator 23 and the second separator 24, the length ends of the first separator 23 and the second separator 24 can be heated so that the first separator 23 and the second separator 24 are at least partially melted, thereby improving the bonding force between the first separator 23 and the second separator 24. That is, the length ends of the first separator 23 and the second separator 24 may be fixed together by a hot laminating process. Of course, during the laminating process of the first separator 23 and the second separator 24, the first separator 23 and the second separator 24 may not be heated.

In this way, the length ends of the first separator 23 and the second separator 24 are easily fixed together, and the cost is low.

Referring to FIG. 6, in some embodiments, a second adhesive (not shown) is provided between the length end of the first electrode plate 21 and at least one of the first separator 23 and the second separator 24. The second adhesive is for fixedly connecting the length end of the first electrode 21 and at least one of the first separator 23 and the second separator 24.

Specifically, the second adhesive is, for example, a double-sided adhesive, an adhesive formed by liquid solidification, or the like. The second adhesive can be made of materials such as an epoxy resin, a phenolic resin, a urea-formaldehyde resin, and polyurethane. It should be noted that the second adhesive may have a certain elasticity so that the second adhesive will not damage the electrode plate and the separator.

In one example, during the manufacturing process of the electrode assembly 20, a second adhesive can be first applied to the length end of the first separator 23, and then the length end of the first electrode plate 21 can be laminated to the second adhesive, so that the length end of the first separator 23 and the length end of the first electrode plate 21 are fixed together. The second adhesive can cover the burrs on the edge of the first electrode plate 21 in the length direction L, thereby reducing the probability of the burrs on the first electrode plate 21 piercing the separator.

In some embodiments, the length end of the first electrode plate 21 is fixed to at least one of the first separator 23 and the second separator 24 by a laminating process.

In one example, during the process of laminating one of the first separators 23 with the length end of the first electrode plate 21, pressure may be applied to the first electrode plate 21, such that the first electrode plate 21 and the first separator 23 can be fixed to each other. During the laminating process of rolling the length end of the first electrode plate 21 to the first separator 23 or the second separator 24, the roller can flatten the burrs on the edge of the first electrode plate 21 in the length direction L, thereby reducing the size of the burrs.

It should be noted that the length end of the first electrode plate 21 is fixed to the length end of one of the first separator 23 and the second separator 24.

In this way, the length end of the first electrode plate 21 can be easily fixed on at least one of the first separator 23 and the second separator 24, and the cost is low.

In some embodiments, the first electrode plate 21 includes a main body 211 and a tab 212 connected to one side of the main body 211 in the width direction W. The width ends of the first separator 23 and the second separator 24 exceed the width ends of the main body 211 and are fixedly connected to each other.

Specifically, the main body 211 of the first electrode plate 21 is substantially rectangular in a flattened state, and the main body 211 of the first electrode plate 21 is for the occurrence of an electrochemical reaction with the second electrode plate 22. The tab 212 extends beyond the edge of the first separator 23 and is used to lead out the current generated by the electrode assembly 20.

The widths of the first separator 23 and the second separator 24 are both greater than the width of the main body 211 of the first electrode plate 21. The orthographic projection of the main body 211 of the first electrode plate 21 on the first separator 23 is located within the contour range of the first separator 23.

It should be noted that the "width end" mentioned above refers to the two ends in the length direction L of the sheet material when the sheet material is in a flattened state. For example, the width end of the first electrode plate 21 is an end of the first electrode plate 21 in the width direction W when the first electrode plate 21 is in a flattened state. The width end portions of the second separator 24 are ends of the second separator 24 in the width direction W when the second separator 24 is in a flattened state.

In this way, the first separator 23 and the second separator 24 can limit the movement of the first electrode plate 21 in the width direction W, reducing the risk of the first electrode plate 21 moving out of the first separator 23 or the second separator 24 along its own width direction W.

In some embodiments, a third adhesive (not shown) is provided between the width ends of the first separator 23 and the second separator 24, and the third adhesive is fixedly connected to the width ends of the first separator 23 and the second separator 24; or, indentations are formed on the width ends of the first separator 23 and the second separator 24.

Specifically, the third adhesive is, for example, a double-sided adhesive, an adhesive formed by liquid solidification, or the like. The third adhesive can be made of materials such as an epoxy resin, a phenolic resin, a urea-formaldehyde resin, and polyurethane. It should be noted that the third adhesive may have a certain elasticity so that the third adhesive will not damage the electrode plate and the separator. In one example, during the manufacturing process of the electrode assembly 20, a third adhesive can be first applied to the width end of the first separator 23, and then the width end of the second separator 24 can be laminated to the third adhesive, so that the width end of the first separator 23 and the width end of the second separator 24 are fixed together.

During the laminating process of the width ends of the first separator 23 and the second separator 24, pressure can be applied to the width ends of the first separator 23 or the second separator 24, so that the first separator 23 and the second separator 24 are bonded and fixed to each other. The width ends of the first separator 23 and the second separator 24 can be laminated together by hot rolling lamination, cold rolling lamination, knurling lamination or the like.

For example, during the laminating process of the first separator 23 and the second separator 24, the width ends of the first separator 23 and the second separator 24 can be heated so that the first separator 23 and the second separator 24 are at least partially melted, thereby improving the bonding force between the first separator 23 and the second separator 24. That is, the width ends of the first separator 23 and the second separator 24 may be fixed together by a hot laminating process. Of course, during the laminating process of the first separator 23 and the second separator 24, the first separator 23 and the second separator 24 may not be heated.

In this way, the width ends of the first separator 23 and the second separator 24 are easily fixed together, and the cost is low.

In certain embodiments, the tab 212 protrudes beyond the edges of the first separator 23 and the second separator 24 in the width direction. In this way, the tab 212 can lead out the current, so that the electrode assembly 20 can work normally.

In some embodiments, a length ratio of at least one of the first separator 23 and the second separator 24 to the first electrode plate 21 is R, and 1.05 < R < 1.5. For example, R can be a ratio of 1.06, 1.1, 1.2, 1.3, 1.4, 1.45, etc. It can be understood that the lengths of the first separator 23 and the second separator 24 can be equal, so that the length ends of the first separator 23 and the second separator 24 can be fixedly connected to each other.

In some embodiments, the length of at least one of the first electrode plate 21 and the second electrode plate 22 is 7 m - 20 m. For example, the length of at least one of the first electrode plate 21 and the second electrode plate 22 is 7 m, 8 m, 9 m, 10 m, 15 m, 20 m, or the like. The first electrode plate 21 and the second electrode plate 22 may have different lengths.

In some embodiments, the length of at least one of the first separator 23 and the second separator 24 is 8 m - 25 m. For example, the length of at least one of the first separator 23 and the second separator 24 is 8 m, 9 m, 10 m, 15 m, 20 m, 25 m, or the like. The first separator 23 and the second separator 24 may have different lengths.

In this way, the first separator 23 and the second separator 24 can completely cover the first electrode plate 21, and the length ends of the first separator 23 and the second separator 24 can be easily fixedly connected.

In some embodiments, the size of the burrs on the edge of the first electrode plate 21 in the length direction L is less than 7 µm. For example, the size of the burrs on the edge of the first electrode plate 21 in the length direction L is 6 µm, 5 µm, 4 µm, 3 µm, 2 µm, etc. It should be noted that the size of the burr refers to the size of the burr protruding from the surface of the first electrode plate 21 in the thickness direction.

In this way, the burrs on the sheared edge of the first electrode plate 21 are smaller in size, thereby reducing the risk of the burrs piercing the first separator 23 or the second separator 24.

In certain embodiments, a bonding force at the length ends of both the first separator 23 and the second separator 24 to the first electrode plate is more than 1 N/m. For example, the bonding force may be 1.5 N/m, 2 N/m, 3 N/m, 6 N/m, 10 N/m, etc. In this way, the first separator 23 and the second separator 24 have a large bonding force, and the two are difficult to be loosened.

In some embodiments, after the length ends of the first separator 23 and the second separator 24 are fixed, the overall air permeability is greater than 230 s/cc (seconds/milliliter). In this way, the air permeability of the laminated first separator 23 and the second separator 24 meets the use requirements.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present application have been shown and described, a person of ordinary skill in the art should understand that various changes, modifications, replacements and variations may be made to the embodiments without departing from the principles and spirit of the present application, and the scope of the present application is as defined by the appended claims and their equivalents.

## Claims

1. An electrode assembly, comprising a first electrode plate, a second electrode plate, a first separator, and a second separator, wherein the first separator, the first electrode plate, the second separator, and the second electrode plate are sequentially stacked and wound into an integrated body, and the second electrode plate and the first electrode plate have opposite polarities;
wherein the first electrode plate has a length end fixedly connected to at least one of the first separator and the second separator , and both the first separator and the second separator have a length end exceeding the length end of the first electrode plate and fixedly connected to each other.

2. The electrode assembly according to claim 1, wherein the length ends of the first separator and the second separator are both provided with a first adhesive which is for fixedly connecting the length ends of the first separator and the second separator; or
indentations are formed on the length ends of both the first separator and the second separator.

3. The electrode assembly according to claim 1 or 2, wherein a second adhesive is provided between the length end of the first electrode plate and at least one of the first separator and the second separator, and the second adhesive is for fixedly connecting the length end of the first electrode plate and at least one of the first separator and the second separator.

4. The electrode assembly according to any one of claims 1 to 3, wherein the first electrode plate comprises a main body and a tab connected to one side of the main body in a width direction, and both the first separator and the second separator have a width end exceeding the width end of the main body and fixedly connected to each other.

5. The electrode assembly according to claim 4, wherein the width ends of the first separator and the second separator are both provided with a third adhesive which is for fixedly connecting the width ends of the first separator and the second separator; or
indentations are formed on the width ends of both the first separator and the second separator.

6. The electrode assembly according to claim 4 or 5, wherein the tab protrudes beyond the edges of the first separator and the second separator in the width direction.

7. The electrode assembly according to any one of claims 1-6, wherein a length ratio of at least one of the first separator and the second separator to the first electrode plate is R, and 1.05 < R < 1.5.

8. The electrode assembly according to any one of claims 1-7, wherein a bonding force at the length ends of both the first separator and the second separator to the first electrode plate is more than 1 N/m.

9. A battery cell comprising a case and an electrode assembly according to any one of claims 1 to 8, wherein the electrode assembly is disposed within the case.

10. A battery, comprising a plurality of the battery cells according to claim 9.

11. An electrical device, comprising the battery cell according to claim 9 or the battery according to claim 10.
